# EUROPÄISCHE PATENTSCHRIFT

(11) **EP 0 604 702 B1**
(45) Veröffentlichungstag und Bekanntmachung des Hinweises auf die Patenterteilung: **08.11.1995**
(21) Anmeldenummer: 93110153.9
(22) Anmeldetag: 25.06.1993
(51) Int. Cl.: B27L 5/06, B23Q 3/155

(54) **Vorrichtung zum schneidenden Abtrennen dünner Bretter von Kanthölzern**
Apparatus for slicing thin planks from squared timber
Dispositif pour trancher du bois équarri en planches

(30) Priorität: 28.12.1992 DE 9218129 U; 17.05.1993 DE 4316463
(43) Veröffentlichungstag der Anmeldung: 06.07.1994
(73) Patentinhaber: Gebrüder Linck Maschinenfabrik "Gatterlinck" GmbH & Co. KG, D-77697 Oberkirch (DE)
(72) Erfinder:
(74) Vertreter: Fuchs Mehler Weiss

(56) Entgegenhaltungen:
- EP-A- 0 497 233
- US-A- 2 592 782

## Beschreibung

Die Erfindung betrifft eine Vorrichtung zum schneidenden Abtrennen dünner Bretter von Kanthölzern nach dem Oberbegriff des Patentunspruches 1.

Eine Vorrichtung der angegebenen Art ist beispielsweise aus der EP-A-497 233 bekannt. Solche Vorrichtungen weisen im allgemeinen einen Zuführtisch auf, gegen den anliegend ein Kantholz im allgemeinen in seiner Längsrichtung gegen eine Messerschneide vorgeschoben wird, die einen Abstand von der Ebene des Zuführtisches aufweist, durch den im wesentlichen die Dicke des abzutrennenden Brettes bestimmt wird. Das Messer weist zwei von seiner Schneide ausgehende, unter einem spitzen Winkel zueinander verlaufende Begrenzungsflächen auf, von denen die eine allgemein parallel zur Fläche des Zuführtisches von der Messerschneide ausgehend weiterverläuft und Teil eines Messertisches bildet, auf dem sich das um eine Brettdicke verminderte Restkantholz nach dem Abtrennen des Brettes weiterhin abstutzt. Die andere Messerfläche, die sich unter einem spitzen Winkel zur Ebene des Messertisches erstreckt, dient im allgemeinen als Anlagefläche Zum Ableiten des in Abtrennung befindlichen Brettes.

Aus der US-A-2 592 782 ist eine Vorrichtung zum Messen von Furnieren mit einem in senkrechter Richtung auf und ab bewegbaren Messerschlitten bekannt. Das Messer ist auf einer Messerträgerplatte justiert, die ihrerseits mittels Schrauben im Messerschlitten verschraubt ist. Die Messerträgerplatte ist zusätzlich in einer Schwenklagerung gelagert, um sie nach losen der Einspannschrauben in eine Position schwenken zu können, in der das Messer innerhalb der Maschine in besserer Zugänglichkeit nachgeschärft oder gelappt werden kann. Die Messereinheit kann auch aus dieser Schwenklagerung ausgehängt werden, um sie gegen eine andere zu tauschen, die jedoch ihrerseits wieder von Hand mit dem Messerschlitten verschraubt werden muß. Die Schwenklagerung dient dabei im wesentlichen nur Zum Halten der Messereinheit in senkrechter Lage während des Verschraubens.

Wenn im Oberbegriff des Patentanspruches 1 angegeben ist, daß die Messerschneide im wesentlichen in der Ebene des Messertisches verläuft, so soll damit angedeutet sein, daß die Schneide auch etwas über die Ebene des Messertisches vorstehen kann.

Der Zuführtisch und der Messertisch, insoweit er sich an die erste Messerfläche anschließt, müssen keine geschlossenen Flächen sein. Beide Tische können beispielsweise Rollen für den Vorschub des Kantholzes enthalten, es ist aber auch möglich, daß der Zuführtisch bis auf eine der Messerschneide gegenüberliegende Andruckkante und auch Teile des Messertisches ganz als Rollenbahn ausgebildet sind. Zwar ist die Anordnung der hier betroffenen Schneideinrichtungen bevorzugt derart, daß Zuführtisch und Messertisch horizontale Fläche bilden und das abgetrennte Brett in dem Spalt zwischen Zuführtisch und Messerschneide nach unten abgeführt wird, die vorliegende Erfindung soll in analoger Ausführung aber auch auf Anordnungen anwendbar sein, bei denen Zuführtisch und Messertisch eine andere Ausrichtung aufweisen, beispielsweise senkrecht angeordnet sind, wobei das Kantholz dann durch eine Andruckeinrichtung seitlich an die beiden Tische angedrückt wird. Die Andruckeinrichtung besteht bei bekannten Vorrichtungen dieser Art aus einem umlaufenden Gummigurt, der mittels an seiner Innenseite angeordneter Druckwalzen gegen das Kantholz gepreßt wird. Vorschubeinrichtungen für das Kantholz können getrennte angetriebene Vorschubwalzen sein, die das Kantholz paarweise von beiden Seiten unter Druck erfassen und es durch die Vorrichtung ziehen bzw. schieben.

Es ist einleuchtend, daß beim rein schneidenden Abtrennen von Brettern von einem Kantholz einerseits mit sehr hohen Vorschubkräften gearbeitet werden muß, um das Messer überhaupt durch das Kantholz zu ziehen, andererseits sind auch verhältnismäßig hohe Vorschubgeschwindigkeiten in der Größenordnung bis zu 150 m/min angebracht, um mit einer Schnittgeschwindigkeit zu arbeiten, die höher ist als die natürliche Spaltgeschwindigkeit des Holzes.

Diese Bedingungen erfordern eine sehr robuste Maschinenausführung. Andererseits unterliegen die verwendeten Messer nicht nur durch die harten Arbeitsbedingungen einer erhöhten Beanspruchung, es können auch Fremdkörper im Holz enthalten sein, die ihrerseits zur Beschädigung der Messerschneide führen. Die harten Arbeitsbedingungen verlangen es ferner, daß das Messer fest und stabil und darüber hinaus in sehr genauer Positionierung mit seinem Messerträger verschraubt ist, wodurch die Wechselzeiten für den Austausch eines Messers bei dessen Beschädigung oder Stumpfwerden nicht unerheblich sind. Es hat sich herausgestellt, daß die Standzeiten solcher Schneidmesser je nach Arbeitsbedingungen gelegentlich in der Größenordnung von nur 2 Stunden liegen können.

In Anlagen mit einer hohen Schneidleistung werden im allgemeinen mehrere Schneideinrichtungen hintereinander angeordnet, die ein Kantholz nacheinander durchläuft, um Bretter von ihm abzutrennen. Je nach Anlagenkapazität ordnet man auch soviele Schneideinrichtungen hintereinander an, daß ein Kantholz in einem Durchgang durch diese Folge von Schneideinrichtungen vollständig in Bretter bestimmter Dicke aufgeteilt wird. So können beispielsweise sieben Schneideinrichtungen hintereinander angeordnet sein, wobei diese Schneideinrichtungen entweder jeweils eine getrennte Schneidmaschine bilden oder aber auch zu Gruppen innerhalb einer Maschine angeordnet sein können.

Muß bei einer solchen Linienanordnung in einer einzelnen Schneideinrichtung das Messer gewechselt werden, ist im allgemeinen die gesamte Linie stillzulegen, auch wenn eine Reserveschneideinrichtung vorhanden ist, durch die ein Kantholz sozusagen im Leerlauf geführt werden kann, ohne von ihm ein Brett abzutrennen. Da die Kanthölzer nach wie vor auch den Messerbereich einer solchen im Leerlauf befindlichen Schneideinrichtung durchlaufen, können die Messerwechselarbeiten im allgemeinen nicht gleichzeitig durchgeführt werden. Werden Messerwechsel an den einzelnen Schneideinrichtungen einer Linie zu unterschiedlichen Zeiten fällig, können überdurchschnittliche Standzeiten der Linie entstehen.

Der Erfindung liegt daher die Aufgabe zugrunde, eine Vorrichtung zum schneidenden Abtrennen dünner Bretter von Kanthölzern derart auszubilden, daß ein erforderlicher Messerwechsel mit einem Minimum an Zeitaufwand und somit Maschinenstillstand durchgeführt werden kann.

Diese Aufgabe wird erfindungsgemäß in grundsätzlicher Art und Weise durch die kennzeichnenden Merkmale des Patentanspruches 1 gelöst.

Dadurch, daß für einen Messerwechsel nicht nur der Wechsel des Werkzeuges selbst sondern der Wechsel eines gesamten Messerträgers mit Messer vorgesehen ist, kann die maschinenbauliche Ausführung stabil genug gewählt werden, um den harten Arbeitsbedingungen zu genügen. So ist es möglich, daß das hier als Messerträger bezeichnete Bauteil einen nicht unerheblichen Teil des Messertisches selbst bildet, eventuell sogar den gesamten Auflagebereich des Messertisches darstellt. Zweckmäßig ist es, den Messerträger derart zu gestalten, daß er seitlich aus der Vorrichtung hinausbewegt werden kann, wobei jedoch auch ein anfängliches geringfügiges Anheben des Messerträgers vorgesehen sein kann, um ihn aus entsprechenden Arretierungen oder Zentrierungen zu lösen. Zur schnellen Befestigung des Messerträgers in der Vorrichtung ist die Schnellspanneinrichtung vorgesehen, die insbesondere hydraulisch unterstützt ist, um Zeitaufwendige mechanische Manipulationen zu vermeiden. In Verbindung mit der Schnellspanneinrichtung sind zweckmäßigerweise auch automatische Zentriermittel vorgesehen.

Wechseleinrichtungen, die diesen Bedingungen genügen, sind bereits aus der Werkzeugmaschinentechnik bekannt. Aus dem Werkzeugmaschinengebiet kennt man Wechselpaletten, die in Form eines Werkstückaufspanntisches ausgebildet sind und die mittels einer Schnellspanneinrichtung mit dem eigentlichen Maschinentisch einer Werkzeugmaschine verbindbar sind. Diese Wechselpaletten gestatten es, ein neues Zu bearbeitendes Werkstück schon außerhalb der Werkzeugmaschine fertig positioniert auf die Wechselpalette aufzuspannen, so daß nach deren Einsetzen in die Werkzeugmaschine unmittelbar mit der Bearbeitung begonnen werden kann, ohne daß längerer Maschinenstillstand für den Werkstückwechsel erforderlich ist. Solche Wechselpaletten dienen, wie gesagt, nicht dem Wechsel eines Werkzeuges, sondern dem Wechsel eines Werkstückes. Für den Werkzeugwechsel in Werkzeugmaschinen sind im allgemeinen andere Arten von Wechselvorrichtungen vorgesehen.

Um bei Vorrichtungen der hier betroffenen Art den verhältnismäßig schwer ausgebildeten Messerträger mit den Messern aus der Vorrichtung herausbewegen Zu können und um einen neuen Messerträger einzusetzen, sind zweckmäßigerweise hierfür mechanische Fördermittel vorgesehen, die entweder ständig an der Vorrichtung angebracht oder zumindest dieser zugeordnet sind oder die nach Bedarf mit der Vorrichtung in Verbindung gebracht werden können. Es ist ferner mindestens eine Ablageeinrichtung vorzusehen, die mit den Fördermitteln verbunden oder verbindbar ist, um den aus der Vorrichtung herausgenommenen Messerträger möglichst unmittelbar an einer Stelle ablegen zu können, an der dann die Arbeit des Messerwechsels ausgeführt werden kann. Zweckmäßigerweise ist jedoch mindestens eine weitere Ablageeinrichtung vorgesehen, auf der sich ein für den Einsatz bereiter Austauschmesserträger in Wartestellung befindet, um erforderlichenfalls mittels der Fördermittel in die Vorrichtung übernommen zu werden.

Gemäß einer bevorzugten Ausführungsform der erfindungsgemäßen Vorrichtung ist einer an einer Wechseleinrichtung angeordneten Ablageeinrichtung eine Vorrichtung zum Schärfen des Schneidmessers, beispielsweise eine Vorrichtung zum Läppen oder Schleifen des Messers zugeordnet oder zuordenbar. Diese Vorrichtung zum Schärfen ist der Ablageeinrichtung so zugeordnet oder zuordenbar, daß ein auf der Ablageeinrichtung befindliches, gebrauchtes Schneidmesser durch die Schärfvorrichtung bearbeitet, z.B. geläppt oder geschliffen und somit wieder in einen gebrauchsfertigen Zustand versetzt werden kann. Die Schärfvorrichtung kann an der Wechseleinrichtung oder beabstandet davon angeordnet sein. Bei dieser Ausführungsform sind die Manipulationen zum Instandhalten des Schneidmessers auf ein Minimum reduziert.

Fördermittel und Ablageeinrichtungen können auf unterschiedlichste Art und Weise, dabei als getrennte Einheiten, wie auch als kombinierte Einheiten ausgebildet sein. Beispielhaft sei als Ausführungsform eine Drehtischeinrichtung genannt, die an diametral gegenüberliegenden Positionen selbst mit zwei Ablageeinrichtungen versehen ist, die durch Drehen des Drehtisches wechselweise in Zuordnung mit der Vorrichtung gebracht werden können, wobei die Drehtischanordnung auch noch die Fördermittel enthält, mit denen ein Messerträger von einer der Vorrichtung zugeordneten Ablageeinrichtung in den Messertisch der Vorrichtung überführt werden kann. Der Messerwechsel wird hier unmittelbar auf dem Drehtisch ausgeführt, und zwar auf der Ablageeinrichtung des Drehtisches, die sich in der vom Messertisch abgewandten Drehposition befindet.

Bei Anordnung mehrerer Schneideinrichtungen in Linie ist es aber auch möglich, einen Drehtisch oder auch eine lineare Fördereinrichtung für einen Förderweg quer zur Linie der Schneideinrichtungen verfahrbar entlang der Linie der Schneideinrichtungen anzuordnen, wobei an der den Schneideinrichtungen abgewandten Seite der Verfahrbahn ein oder mehrere Ablageeinrichtungen angeordnet sind, so daß das verfahrbare Fördermittel einerseits je nach Bedarf dem Messertisch einer Vorrichtung und zum anderen einer Ablageeinrichtung zugeordnet werden kann.

Für Anordnung an einer einzelnen Schneideinrichtung ist es auch möglich, einen an den Messertisch angeschlossenen Querförderer vorzusehen, der an seinem dem Messertisch entfernten Ende beispielsweise zu beiden Seiten je eine Ablageeinrichtung aufweist, von der ein Messerträger auf den Förderer übernommen oder auf dem ein Messerträger vom Förderer abgelegt werden kann.

Bei Holzschneideinrichtungen der hier betroffenen Art bildet das Messer im allgemeinen einen verhältnismäßig spitzen Winkel mit der Vorschubrichtung des Kantholzes, die hier auch als Längsrichtung der Vorrichtung bezeichnet werden soll. Das Messer erstreckt sich damit über einen nicht unbeträchtlichen Bereich dieser Längsrichtung, der hier als Erstreckungsbereich des Messers bezeichnet werden soll. Durch die sehr spitzwinklig diagonale Anordnung des Messers ragen sowohl Zuführtisch wie auch Messertisch von entgegengesetzten Seiten der Längsrichtung der Vorrichtung in ihren Wirkungsflächen quasi dreieckförmig in den Messererstreckungsbereich hinein. Es ist dieser, in den Messererstreckungsbereich hineinragende Teil des Messertisches, der zweckmäßigerweise von dem hinter dem Messerende sich eventuell fortsetzenden Teil des Messertisches getrennt ausgebildet und Teil des auswechselbaren Messerträgers ist, der so ausgebildet ist, daß er quer zur Längsrichtung der Vorrichtung seitlich aus dieser herausbewegbar ist. Dabei erstreckt sich der Messerträger, wie gesagt, in seiner Breite zumindest über den gesamten Längserstreckungsbereich des Messers. Bei dieser Anordnung kann ein Messerträger mit der Messerschneide voran derart von der Seite her in die Vorrichtung eingefahren werden, daß sich die Messerschneide der ihr gegenüberliegenden Andruckleiste des Zuführtisches nähert und in richtigem Abstand von dieser in Position gebracht und arretiert werden kann. Bei einer derartigen Ausführung wird auch weitgehend vermieden, daß beispielsweise vor Austausch eines Messerträgers erst die Andruck- und Vorschubmittel für das Kantholz entsprechend wegbewegt werden müssen.

Es ist sogar denkbar, daß bei einer derartigen Ausbildung ein Messerwechsel bei laufender Linie ausgeführt werden kann, wenn die vom Wechsel betroffene Schneideinrichtung in Leerlaufstellung gebracht wird, bei der das Messer zum Vermeiden eines Eingriffs mit einem durchlaufenden Kantholz bis in oder unter die Ebene des Zuführtisches zurückgefahren wird. Um auch bei zurückgefahrenem Messer und in dieser Position durchgeführtem Messerwechsel den Leerdurchlauf von Kanthölzern weiter zu ermöglichen, könnte es erforderlich sein, den Messertisch in der Weise zu teilen, daß sein im Erstreckungsbereich des Messers befindlicher Teil zusammen mit dem Messer gegenüber einem sich anschließenden Teil zurückgefahren werden kann, damit auch bei Leerlaufbetrieb, bei dem der Zuführtisch und der weitere Teil des Messertisches auf eine gleiche Ebene gebracht werden, das Messer sicher außer Eingriff mit einem Kantholz gehalten und sogar in dieser Position trotz weiteren Durchlaufs von Kanthölzern ein Messerwechsel ausgeführt werden kann.

Diese Anordnung kann auch dann sinnvoll sein, wenn eine einzige Vorrichtung zwei Schneideinrichtungen enthält und der Messertisch der ersten Schneideinrichtung gleichzeitig als Zuführtisch für die nächste Schneideinrichtung dient. Bei geteilter Ausführung des Messertisches könnte bei einem Wechsel des ersten Messers dann die zweite Schneideinrichtung weiterbetrieben werden.

Die Schnellverspannung des Messerträgers in der Vorrichtung kann beispielsweise derart ausgeführt sein, daß eines der beiden Teile an seiner mit dem anderen Teil in Anlage zu bringenden Fläche vorstehende Elemente mit hammerkopfartigem Querschnitt aufweist, die beim Einfahren des Messerträgers von der Seite her in hinterschnittene T-Nuten des jeweils anderen Teiles eingeführt werden, und daß die vorspringenden Elemente mit dem hammerkopfartigen Querschnitt durch hydraulische Betätigungsmittel gegen die hinterschnittenen Flächen der T-Nuten verspannt werden. Dies ist nur eine beispielhafte Ausführungsmöglichkeit der gegenseitigen Schnellverspannung der betroffenen Teile. Solche Verspannungen und auch positionsgenaue Zentriermittel sind aus Werktischwechseleinrichtungen aus dem Werkzeugmaschinenbau bekannt. Beim vorliegenden Anwendungsfall sollte die Verspannung vorzugsweise in der Art erfolgen, daß das Messer in einer Richtung senkrecht zu seiner Schneide in der Vorschubebene des Kantholzes sicher gegen die Vorschubkräfte des Kantholzes abgestützt ist.

Zur Erläuterung der Erfindung werden nachstehend Ausführungsbeispiele anhand der Figuren detailliert beschrieben.

Es zeigen:
- Fig. 1: einen Schnitt durch eine erfindungsgemäße Schneidvorrichtung quer zur Förderrichtung des zu schneidenden Kantholzes mit einem Drehtisch für den Werkzeugwechsel,
- Fig. 2: einen Schnitt entlang der Linie I-I in Fig. 1,
- Fig. 3a: einen Schnitt durch eine erste Ausführungsform einer Spannvorrichtung, mit der der Messerträger auf einer Wechseleinrichtung bzw. in einer Schneidvorrichtung befestigbar ist,
- Fig. 3b: einen Schnitt durch eine andere Ausführungsform einer Spannvorrichtung, mit der der Messerträger auf einer Wechseleinrichtung bzw. in einer Schneidvorrichtung befestigbar ist,
- Fig. 3c: eine Aufsicht auf eine Spannvorrichtung,
- Fig. 4: eine Mehrfachanordnung von Schneidvorrichtungen mit verfahrbarer Wechseleinrichtung.

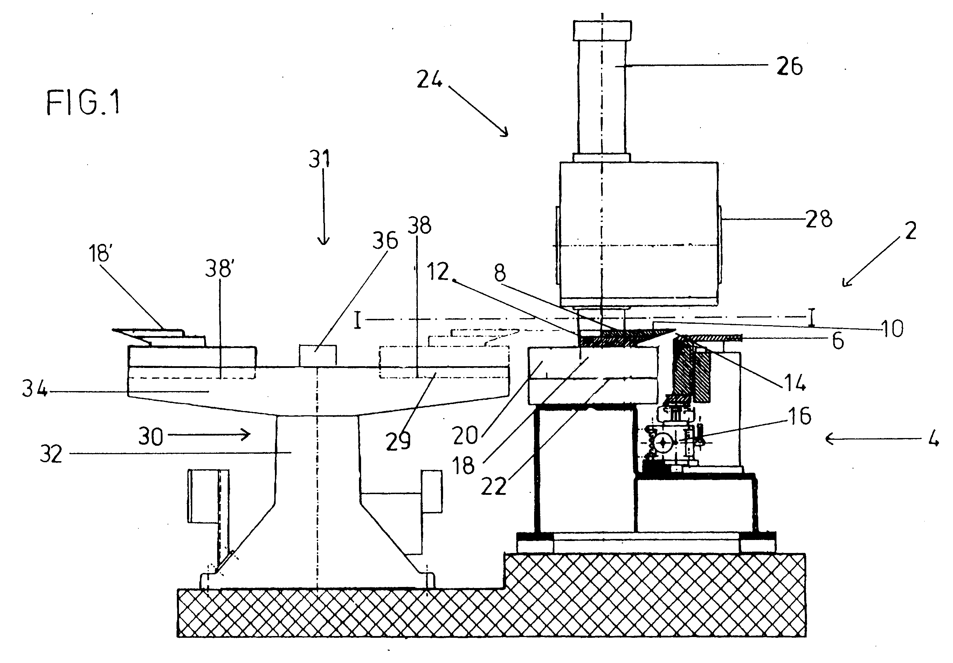

Wie aus Fig. 1 ersichtlich, ist eine Schneidvorrichtung 2 zunächst aus einem Unterbau 4 aufgebaut. Dieser Unterbau 4 trägt auf seiner Oberseite einen Zuführtisch 6 und einen Messertisch 8.

Zuführ- und Messertisch verlaufen horizontal und dienen als Auflage für das zu schneidende Kantholz. Der Zuführtisch 6 ist in der Richtung "A", in der das zu schneidende Kantholz der Schneidevorrichtung 2 zugeführt wird (nachfolgend Richtung "A") gesehen, vor dem Messertisch 8 angeordnet.

Im Messertisch 8 ist an der dem Zuführtisch 6 zugewandten Kante ein Schneidmesser 10 eingesetzt. Die Schneide des Messers 10 ist dem Zuführtisch 6 zugewandt. Das Schneidmesser 10 ist von einem im Messertisch 8 vorgesehenen Messerhalter 12 gehalten. Das Messer 10 ist von dem Zuführtisch 6 nach oben beabstandet angeordnet. Der durch den Abstand zwischen Schneidmesser 10 und Zuführtisch 6 entstehende Spalt 14 ist durch Anheben oder Absenken des Zuführtisches 6 mit einer Stellvorrichtung 16 der Höhe nach einstellbar und gibt die Dicke des abzutrennenden Brettes vor.

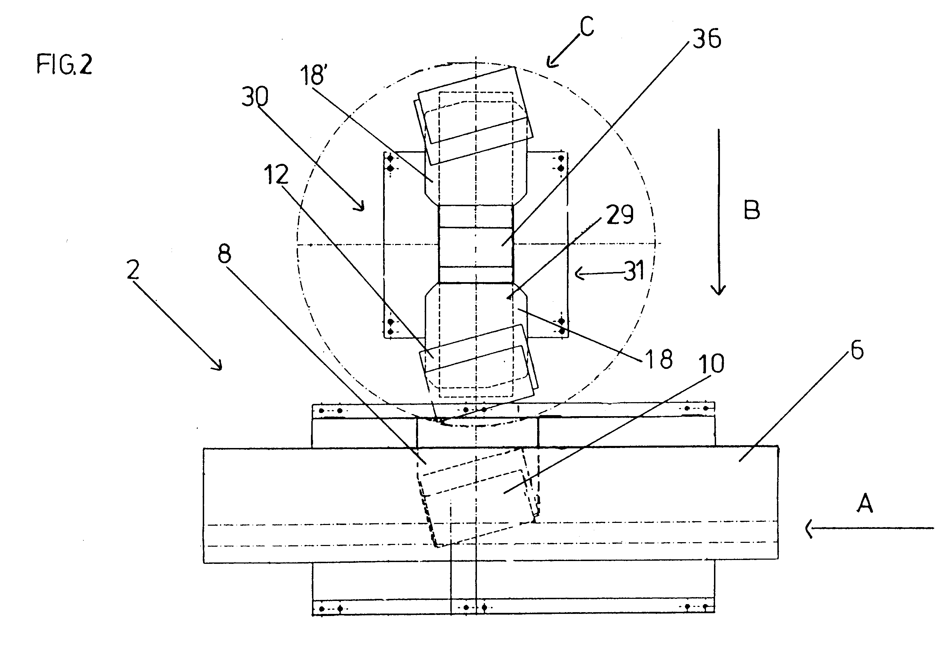

Weiter ist das Schneidmesser 14, bezogen auf die Zuführrichtung "A" des Kantholzes, in einem spitzen Winkel angeordnet (vgl. Fig. 2). Da die in Fig. 1 für die Darstellung des Querschnitts durch die Schneidvorrichtung gewählte Querschnittsebene senkrecht zur Zuführrichtung "A" verläuft, wird in der Fig. 1 die Lage des Spaltes 14 nur für eine bestimmte Stelle der Schneidvorrichtung 2 gezeigt. Wird die Querschnittsebene in Richtung "A" verschoben, so wird der Zuführtisch 6 aufgrund der schrägen Erstreckung der Messerschneide schmaler, umgekehrt wird der Zuführtisch 6 breiter und der sichtbare Querschnitt des Schneidmessers 10 wird schmaler, wenn die Querschnittsebene entgegen der Zuführrichtung "A" verschoben wird.

Die Schneidvorrichtung 2 besteht weiter aus einem Überbau 24, der von zwei Säulen 26, die im Unterbau 4 der Schneideinrichtung verankert sind, getragen ist. Der Überbau 24 erstreckt sich oberhalb vom Zuführtisch 6 und Messertisch 8. In dem Überbau sind Andruckmittel angeordnet, die von einem über zwei Umlenkrollen 28, von denen mindestens eine angetrieben ist, geführten Druckgurt (nicht dargestellt) umschlossen sind, der in Zuführrichtung "A" des Kantholzes umläuft. Der Druckgurt liegt auf der Oberseite des zu schneidenden Kantholzes auf und überträgt die Druckkraft der zwischen den Umlenkrollen angeordneten und senkrecht zum Kantholz wirkenden Andruckmittel in Form von nicht näher dargestellten Andruckrollen auf das zu schneidende Kantholz und drückt dieses auf den Zuführtisch 6 und/oder den Messertisch 8 und gegen die Schneide des Messers 10.

Die vorstehend beschriebenen Vorrichtungen werden wie folgt genutzt: Zum Schneiden eines Kantholzes wird das Kantholz in Richtung "A" in die Schneidvorrichtung 2 eingeführt und unter dem umlaufenden Druckgurt über den Zuführtisch 6 dem Schneidmesser 10 zugeführt. Die Andruckrollen üben dabei auf das Kantholz einen, bezogen auf den Zuführtisch 6, senkrecht wirkenden Druck auf das Kantholz aus. Entlang der Messerschneide des Schneidmessers 10 wird an der Unterseite des Kantholzes, die auf dem Zuführtisch 6 aufliegt, ein dünnes Brett abgeschnitten, dessen Dicke durch die Weite des Spaltes 14 bestimmt wird. Das abgetrennte Brett wird entlang der unteren Begrenzungsfläche des Schneidmessers 10 aus der Schneidvorrichtung 2 abgeführt. Das verbleibende Kantholz wird weiter in Richtung "A" über den Messertisch 12 aus der Schneidvorrichtung 2 herausbewegt und gegebenenfalls einer weiteren Schneidvorrichtung zugeführt.

Je nach Betriebsbedingungen muß das Messer einer Schneidvorrichtung nach einer gewissen Betriebszeit gewechselt werden.

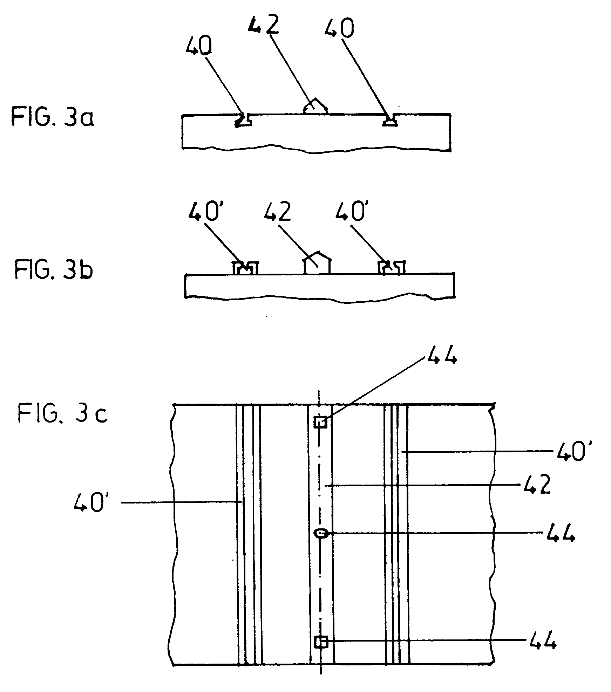

Zu diesem Zweck ist der Messerhalter 12 mit dem darauf angeordneten Schneidmesser 10 im Unterbau 8 auf einem Messerträger 18 befestigt, der in den Messertisch 8 eingesetzt und lösbar mit der Schneidvorrichtung 2 verbunden ist. Der Messerträger 18 weist einen Grundkörper 20 auf, der mit seiner Unterseite auf einer Aufspannfläche 22 der Schneidvorrichtung 2 verriegelbar ist. Die Verriegelungselemente sind nachstehend in Verbindung mit den Fig. 3a-3c näher erläutert.

Wie aus Fig. 2 ersichtlich ist, erstreckt sich der Messerträger 18 in der Zuführrichtung "A" über die gesamte Länge der Messerschneide. Der Zuführtisch 6 ist an der der Messerschneide des Schneidmessers 10 zugewandten Seite so ausgeschnitten, daß der Messerträger 18 beim Wechseln des Messers in der in Fig. 2 durch den Pfeil "B" angedeuteten Richtung, in derselben Ebene parallel zur Aufstellfläche der Schneidvorrichtung, aber senkrecht zur Zuführrichtung "A" des Kantholzes ungehindert in die Schneidvorrichtung 2 eingesetzt und aus der Schneidvorrichtung herausbewegt werden kann.

Zum Wechseln des Messerträgers 18 sind eine Förderbahn 29 und Verschiebemittel 36 aufweisende Fördermittel 31 vorgesehen, die als Teil eines Drehtisches 30 ausgebildet sind. Solche Drehtische sind in ähnlicher Form zum Manipulieren von Werkstücken bekannt. Der Drehtisch 30 besteht aus einem Untergestell 32, in oder an dem gegebenenfalls Antriebsaggregate und/oder Steuervorrichtungen angeordnet sind, und auf dem ein Schwenktisch 34 angeordnet ist. Der Schwenktisch 34 ist drehbar gelagert und rotiert, wie in Fig. 2 angedeutet um 360°, in einem Drehkreis "C" in einer Ebene, die parallel zur Zuführrichtung "A" und der Bewegungsrichtung "B" des Messerträgers 18 verläuft. Der Schwenkantrieb kann durch einen am Untergestell 32 angebrachten Elektromotor, aber auch hydraulisch, pneumatisch oder durch irgendeinen anderen geeigneten Antrieb betrieben werden.

Der Drehtisch 30 ist der Schneidevorrichtung 2 zugeordnet. Demzufolge sind Untergestell 32 und Schwenktisch 34 so bemessen, daß sich der Schwenktisch 34 auf gleicher Höhe befindet wie die Aufspannfläche 22 für den Messerträger in der Schneidvorrichtung 2. Dadurch wird sichergestellt, daß beim Wechseln eines Messerträgers 18 der Messerträger durch die Fördermittel im wesentlichen horizontal in der in Fig. 2 angedeuteten Richtung "B" bewegt wird. Weiterhin sind nicht näher dargestellte Steuervorrichtungen, beispielsweise am Untergestell 32 vorhanden, die den Bewegungsablauf des Fördermittels beim Wechseln eines Messerträgers steuern.

Die Verschiebemittel 36 der Fördermittel 31 sind z.B. als mindestens zwei hydraulisch oder pneumatisch betriebene Zylinder ausgeführt, die im Mittelpunkt des Schwenktisches 34 angeordnet sind, und die in zwei entgegengesetzte Richtungen ausfahrbar sind. Alternativ können die Verschiebemittel auch einen mechanischen Antrieb aufweisen. Die Verschiebemittel 36 sind mit nicht näher dargestellten Mitteln zum Erfassen eines Messerträgers 18 versehen und dem Messertisch 8 mit dem darin verspannten Messerträger so zugeordnet, daß sie nach Lösen des Messerträgers diesen aus der lösbaren Befestigung in der Schneidvorrichtung 2 über die Förderbahn 29 herausbewegen können. Nach Erfassen des Messerträgers durch die Verschiebemittel 36 wird der Messerträger durch Expandieren oder Kontrahieren der Verschiebemittel in Richtung "B" von der Aufspannfläche 22 weg- oder zu der Aufspannfläche 22 hinbewegt.

In den Schwenktisch 34 sind weiter zwei Ablageflächen 38, 38' für Messerträger 18 integriert. Diese Flächen 38, 38' sind einander entgegengesetzt spiegelbildlich auf der Oberseite des Schwenktisches 34 angeordnet und können jeweils von der Peripherie des Schwenktisches 34 zum Mittelpunkt hin mit je einem Messerträger 18 beschickt werden. Die Ablageflächen 38, 38' weisen Spannvorrichtungen zum lösbaren Befestigen der Messerträger 18 auf, die denen der Aufspannfläche 22 in der Schneidvorrichtung 2 entsprechen.

Ausführungsbeispiele für lösbare Arretierungen auf Aufspannflächen 22 oder Ablageflächen 38, 38' zum Verriegeln von Messerträgern zeigen die Fig. 3a, 3b und 3c. Solche lösbaren Arretierungen sind aus der Werkzeugmaschinentechnik für Werkzeugspanntische an sich bekannt.
Fig. 3a zeigt einen Schnitt durch eine erste Ausführungsform einer Spannvorrichtung für einen Messerträger 18, bei der in die Aufspannfläche 22 oder in die Ablageflächen 38, 38' mindestens zwei parallele T-Nuten 40 eingelassen sind, die in Richtung des Pfeiles "B" verlaufen, deren Länge im wesentlichen der Länge des Messerträgers 18 entspricht und in die hammerkopfartige Verriegelungselemente, die an der Unterseite des Messerträgers 18 (nicht dargestellt) ausgebildet sind, eingreifen. Die korrespondierenden Verriegelungselemente werden im wesentlichen durch paralleles Verschieben des Messerträgers auf der Aufspann- bzw. Ablagefläche miteinander in Eingriff gebracht. Wenn diese Verriegelungselemente mit den T-Nuten 40 im Eingriff stehen, ist der Messerträger auf der Aufspann- bzw. Ablagefläche sicher fixiert.

Um das Einführen der Verriegelungselemente in die T-Nuten zu erleichtern, ist auf der Aufspann- bzw. Ablagefläche eine erhabene, profilierte Führungsschiene 42 angebracht. An der Unterseite des Grundkörpers 20 des Messerträgers ist eine mit der Führungsschiene korrespondierende, profilierte Ausnehmung (nicht dargestellt) vorhanden. Beim Verschieben des Messerträgers 18 gleitet dieser entlang der Führungsschiene 42. Dadurch wird sichergestellt, daß die Elemente der Spannvorrichtung störungsfrei miteinander in Eingriff gebracht werden können. Wenn die Verriegelungselemente miteinander im Eingriff stehen, werden sie durch eine nicht dargestellte Betätigungsvorrichtung gegeneinander verspannt. Die Betätigungsvorrichtung kann hydraulisch, pneumatisch oder mechanisch betrieben werden.

Fig. 3b zeigt eine abgewandelte Spannvorrichtung für den Messerträger 18, bei der die Nuten 40' nicht in die Aufspannfläche 22 der Schneidvorrichtung oder die Ablagefläche 38, 38' des Schwenktisches eingearbeitet sind, sondern auf die Aufspann- bzw. Ablagefläche geschweißte oder geschraubte, erhaben vorstehende, abgewinkelte Leisten sind. Auch die Fig. 3b zeigt eine profilierte Führungsschiene 42 zum Führen des Messerträgers in die vorbestimmte Lage, bezogen auf die T-Nuten 40' auf der Aufspann- bzw. Ablagefläche. Auch bei der in Fig. 3b gezeigten Spannvorrichtung werden die Verriegelungselemente des Messerträgers und der Aufspann- bzw. Ablageflächen im wesentlichen durch paralleles Verschieben miteinander in Eingriff gebracht.

Fig. 3c zeigt eine Aufsicht auf eine Spannvorrichtung für Messerträger. Neben den bereits beschriebenen Verriegelungselementen 40' weist diese Spannvorrichtung auch Positionierhilfen 44 für den Messerträger auf. Die Positionierhilfen bewirken eine genaue Ausrichtung des Schneidmessers 10 in der Schneidvorrichtung 2. Da zum Sicherstellen einer guten Schnittqualität das Schneidmesser nicht nur sicher verspannt sein muß, sondern auch stets eine vorbestimmte räumliche Stellung mit vorbestimmten Koordinaten in den Richtungen "A" und "B" sowie in der Höhe bezogen auf den Zuführtisch 6 einnehmen muß, wird durch das Vorsehen der Positionierhilfen eine stets gleichbleibende, reproduzierbare Ausrichtung des Messerträgers 18 in der Schneidvorrichtung sichergestellt.

Die Positionierhilfen 44 sind im vorliegenden Ausführungsbeispiel als Ausnehmungen in die Führungsschiene 42 eingearbeitet und die vorgegebene Stellung des Messerträgers ist nur dann erreicht, wenn mit den Ausnehmungen 44 korrespondierende Vorsprünge an der Unterseite des Grundkörpers 20 des Messerträgers (nicht dargestellt) in diese Ausnehmungen 44 eingreifen. Bei dieser Ausführung ist der Messerträger etwas anzuheben, um ihn aus den Positionierhilfen zu lösen.

Spannvorrichtungen, Messerträger und die der Schneidvorrichtung 2 zugeordneten Fördermittel wirken beim Wechseln eines Messerträgers wie folgt zusammen: Der Drehtisch 30 ist in der Weise angeordnet, daß eine erste, unbelegte Ablagefläche 38 so zur Schneidvorrichtung 2 ausgerichtet ist, daß der aus der Schneidvorrichtung herauszubewegende Messerträger 18 nach Lösen der Spannvorrichtung mittels einer Verschiebung in Richtung "B" von der Aufspannfläche 22 auf die Ablagefläche 38 verschoben werden kann. Die Verschiebemittel 36 expandieren zu diesem Zweck aus ihrer Ruhestellung im Mittelpunkt des Schwenktisches 34 über die unbelegte Ablagefläche 38 hinweg bis zu dem in der Schneidvorrichtung verspannten Messerträger 18, ergreifen den Messerträger und bewegen den Messerträger dann nach Lösen der Spannvorrichtung durch ein Kontrahieren der Verschiebemittel 36 aus der Schneidvorrichtung 2 heraus bis auf die Ablagefläche 38. Auf der Ablagefläche 38 wird der Messerträger 18 auf die gleiche Weise lösbar verriegelt wie in der Schneidvorrichtung 2. Nach Verriegeln des Messerträgers 18 auf der Ablagefläche 38 werden die Verschiebemittel 36 gelöst und kehren in ihre Ruhestellung im Mittelpunkt des Schwenktisches 34 zurück.

Der Schwenktisch wird jetzt um 180° gedreht, so daß die zweite, mit einem gebrauchsfertigen Messerträger 18' belegte Ablagefläche 38' nunmehr der Aufspannfläche 22 in Richtung des Pfeiles "B" genau gegenüberliegt. Die Verschiebemittel 36 expandieren dann in Richtung auf die zweite Ablagefläche 38' und erfassen den auf der Ablagefläche 38' lösbar befestigten Messerträger 18'. Nach Entriegeln des Messerträgers 18' wird durch weiteres Expandieren der Verschiebemittel 36 in Richtung "B" der Messerträger bis auf die Aufspannfläche 22 in der Schneidvorrichtung 2 verschoben. Nach Erreichen der vorgegebenen Position in der Schneidvorrichtung 2 wird der Messerträger 18' in der vorbestimmten Position in der Schneidvorrichtung 2 verspannt. Nunmehr stehen die Verriegelungselemente 40 und die Positionierhilfen 44 der Aufspannfläche 22 mit den korrespondierenden Verriegelungselementen des Messerträgers im Eingriff und das auf dem Messerträger 18' angeordnete Schneidmesser 10 nimmt eine in Richtung "A" und "B" sowie in bezug auf den Zuführtisch 6 vorbestimmte Position ein. Nach dem Verspannen des Messerträgers 18' in der Schneidvorrichtung 2 werden die Verschiebemittel 36 gelöst und kehren zurück in ihre Ruhestellung auf dem Schwenktisch 34.

Unmittelbar nach dem Verriegeln des Messerträgers 18' in der Schneidvorrichtung 2 ist diese wieder betriebsbereit. Der erste Messerträger 18 kann nunmehr auf der Ablagefläche 38 auf dem Schwenktisch 34 bearbeitet werden, beispielsweise durch Auswechseln des Schneidmessers.

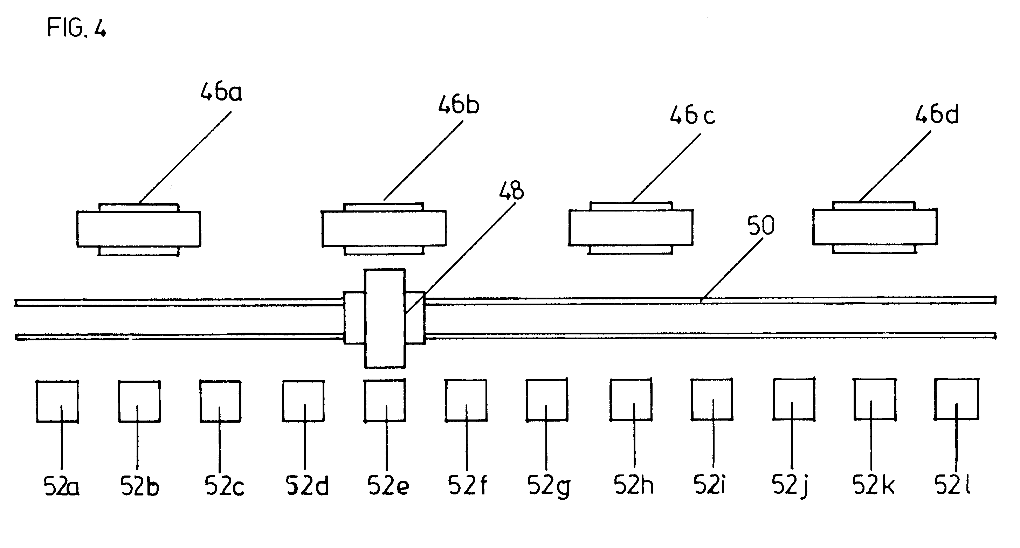

Die in Fig. 4 gezeigte Anordnung von vier Schneidvorrichtungen hintereinander ist dazu bestimmt, von einem Kantholz in Folge vier dünne Bretter hintereinander abzuschneiden. Die Vorrichtungsanordnung nach Fig. 4 besteht aus hintereinander angeordneten Schneidvorrichtungen 46a-d, Fördermittel 48, die auf einer Fahrbahn 50, die parallel zu den Schneidvorrichtungen 46a-d verläuft, verfahrbar angeordnet und somit den Schneidvorrichtungen zuordenbar sind und aus Ablagetischen 52a-l zum Ablegen von Messerträgern, die parallel zu den Schneidvorrichtungen 46a-d und der Fahrbahn 50 so aufgestellt sind, daß die Fahrbahn 50 zwischen den Schneidvorrichtungen 46a-d auf der einen Seite und den Ablagetischen 52a-l auf der anderen Seite verläuft.

Die Fördermittel 48 sind als verfahrbahrer Tisch ausgebildet, auf dessen Oberfläche eine Förderbahn als Teil der Fördermittel angeordnet ist, die in Fig. 4 jedoch nicht näher dargestellt sind. Die Fördermittel 48 können selbstfahrend mit einem am Untergestell befestigten Motor oder aber mit einem externen Antrieb ausgestattet sein.

Die Ablagetische 52a-l bestehen aus einem Gestell, dessen Oberseite in der Weise ausgestaltet ist, daß darauf ein Messerträger verspannt werden kann, beispielsweise wie in Fig. 3 gezeigt. Oberseite der Ablagetische, Ablageflächen und Aufspannfläche der Schneidvorrichtungen sind in einer horizontalen Ebene angeordnet, so daß die Messerträger im wesentlichen in einer horizontalen Bewegung verschoben werden können.

Der Austausch eines gebrauchten Messerträgers aus einer der Schneidvorrichtungen 46a-d gegen einen gebrauchsfertigen Messerträger wird vorbereitet, indem die Fördermittel 48 durch Verschieben auf der Fahrbahn 50 der Schneidvorrichtung zugeordnet wird, deren Messerträger auszutauschen ist. Nachdem die Fördermittel 48 der jeweiligen Schneidvorrichtung zugeordnet sind, wird der Messerträger, wie zuvor in Erläuterung der Fig. 1 und 2 beschrieben, aus der Schneidvorrichtung herausbewegt und auf dem Fördermittel verspannt. Die Fördermittel werden dann vor einen unbelegten Ablagetisch 52 a-l verfahren und der Messerträger wird durch die Fördermittel auf den Ablagetisch verschoben. Nach Verspannen des Messerträgers auf dem Ablagetisch werden die Fördermittel vor einen weiteren Ablagetisch 52 a-l verfahren, auf dem ein gebrauchsfertiger Messerträger verspannt ist. Das Fördermittel bewegt diesen Messerträger auf die Förderbahn und verspannt ihn dort. Nachdem das Fördermittel erneut vor der Schneidvorrichtung positioniert ist, wird der gebrauchsfertige Messerträger von der Förderbahn in die Schneidvorrichtung bewegt und dort positionsgenau verspannt.

### Bezugszeichenliste

- 2: Schneidvorrichtung
- 4: Unterbau
- 6: Zuführtisch
- 8: Messertisch
- 10: Schneidmesser
- 12: Messerhalter
- 14: Spalt
- 16: Stellvorrichtung
- 18, 18': Messerträger
- 20: Grundkörper
- 22: Aufspannfläche
- 24: Überbau
- 26: Säulen
- 28: Umlenkrollen
- 29: Förderbahn
- 30: Drehtisch
- 31: Fördermittel
- 32: Untergestell
- 34: Schwenktisch
- 36: Verschiebemittel
- 38, 38': Ablageflächen
- 40, 40': T-Nuten
- 42: Führungsschiene
- 44: Positionierhilfen
- 46a-d: Schneidvorrichtungen
- 48: Fördermittel
- 50: Fahrbahn
- 52a-j: Ablagetische

## Patentansprüche

1. Vorrichtung zum schneidenden Abtrennen dünner Bretter von Kanthölzern mit
- einem ersten oder Zuführtisch (6),
- mindestens einem zweiten oder Messertisch (8), im wesentlichen als Auflage für ein nach dem Abtrennen eines Brettes in seiner Dicke um eine Brettdicke vermindertes Restkantholz,
- einem an der dem Zuführtisch (6) zugewandten Vorderkante des Messertisches (8) angeordneten Messer (10), dessen Messerschneide im wesentlichen in der Ebene des Messertisches (8) und in parallelem Abstand von der Ebene des Zuführtisches (6) verläuft, wobei zwischen Messerschneide und der ihr gegenüberliegenden Hinterkante des Zuführtisches ein Spalt (14) zum Abführen eines abgetrennten Brettes vorgesehen und der Zuführtisch (6) und der Messertisch (8) im Abstand ihrer Ebenen relativ zueinander verstellbar sind, Zum Einstellen der Dicke eines abzutrennenden Brettes,
- sowie mit Vorschubmitteln zum Vorschieben eines vom Zuführtisch (6) unterstützten Kantholzes im wesentlichen in dessen Langsrichtung über den Zuführtisch und gegen die Schneide des Messers (10) und Andruckmitteln zum Andrücken eines Kantholzes gegen Zuführ- und Messertisch während des Abtrennens eines Brettes,
dadurch gekennzeichnet, daß das Messer (10) auf einen Messerträger (18, 18') aufgespannt ist, der als wechselbare Baueinheit in den Messertisch (8) einsetzbar und in diesem mittels einer insbesondere hydraulisch unterstützten Schnellspanneinrichtung (40, 42, 44) positionsgenau einspannbar ist.

2. Vorrichtung nach Anspruch 1, dadurch gekennzeichnet, daß dem Messertisch (8) zugeordnete oder zuordenbare Fördermittel (31) vorgesehen sind, mit deren Hilfe der Messerträger (18, 18') gegebenenfalls nach einer gewissen Anhebebewegung im wesentlichen in seitlicher Richtung (B) aus dem Messertisch (8) herausfahrbar ist.

3. Vorrichtung nach Anspruch 2, dadurch gekennzeichnet, daß die Fördermittel (31) mit mindestens einer ersten Ablageeinrichtung (38) für die Ablage eines Messerträgers (18) verbunden bzw. verbindbar sind.

4. Vorrichtung nach Anspruch 3, dadurch gekennzeichnet, daß mindestens eine weitere Ablageeinrichtung (38') zur Aufnahme eines Messerträgers (18) in Wartestellung vorgesehen ist, und daß die Fördermittel (31) ausgebildet sind, einen ersten Messerträger (18) aus dem Messertisch (8) zu übernehmen, ihn auf der ersten Ablageeinrichtung (38) abzusetzen, um dann einen zweiten Messerträger (18') aus der Wartestellung von der zweiten Ablageeinrichtung (38') zu übernehmen und in den Messertisch (8) einzufahren.

5. Vorrichtung nach Anspruch 4, dadurch gekennzeichnet, daß die Fördermittel (31) und Ablageeinrichtungen (38, 38') Teil einer Drehtischanordnung (30) sind, die entlang ihrem Drehkreis mit mindestens zwei Ablageeinrichtungen (38, 38') versehen ist, von denen jede in Zuordnung zum Messertisch (8) bewegbar ist, und daß die Fördermittel (31) an der Drehtischanordnung vorgesehene Mittel (36) zum Austausch eines Messerträgers (18, 18') zwischen dem Messertisch (8) und einer in Zuordnung mit diesem befindlichen Ablageeinrichtung (38, 38') einschließen.

6. Vorrichtung nach mindestens einem der Ansprüche 1-5, bei der das Messer (10) im spitzen Winkel zur Vorschubrichtung (A) eines Kantholzes angeordnet ist, dadurch gekennzeichnet, daß der Messerträger (18) in einer der der Messerschneide gegenüberliegenden Hinterkante des Zuführtisches (6) abgewandten Richtung quer zur Vorschubrichtung (A) eines Kantholzes aus dem Messertisch (8) herausfahrbar ist.

7. Vorrichtung nach Anspruch 6, dadurch gekennzeichnet, daß die Breite des Messerträgers (18) in Vorschubrichtung (A) eines Kantholzes im wesentlichen der Länge der Messererstreckung in dieser Vorschubrichtung (A) entspricht.

8. Vorrichtung nach Anspruch 7, dadurch gekennzeichnet, daß der Messerträger (18) mit seinem Teil des Messertisches und der Messerschneide unter die Ebene des restlichen Messertisches (8) zurückfahrbar ist.

9. Vorrichtung nach mindestens einem der Ansprüche 1-8, dadurch gekennzeichnet, daß die Schnellspanneinrichtung (40, 42, 44) am Messerträger (18) oder am Messertisch (8) vorgesehene Elemente mit hammerkopfartigem Querschnitt aufweist, die beim Einfahren des Messerträgers (18) in entsprechende T-förmig hinterschnittene Nuten (40) des jeweils anderen Teiles einführbar sind, und daß die Elemente mit hammerkopfartigem Querschnitt mittels hydraulischer Betätigungseinrichtungen gegen die Hinterschneidungsflächen der T-förmigen Nuten verspannbar sind.

10. Vorrichtung nach einem der Ansprüche 3-9, dadurch gekennzeichnet, daß einer Ablageeinrichtung (38, 38') eine Vorrichtung zum Schärfen des Schneidmessers zugeordnet oder zuordenbar ist, mit der ein auf der Ablageeinrichtung befindliches Schneidmesser bearbeitbar ist.

## Claims

1. A device for slicing off thin planks from squared timber, comprising
- a first or feeding table (6),
- at least a second or knife table (8), essentially serving as support for the remnant squared timber when a plank has been sliced off, the thickness of said remnant squared timber being diminished by the thickness of said plank,
- a knife (10) disposed at the front edge of the knife table (8) facing said feeding table, the knife-edge essentially running in the plane of the knife table (8) and with a parallel distance from the plane of the feeding table (6), whereas a gap (14) is provided between the knife-edge and the back edge of said feeding table lacing said knife-edge in order to divert a sliced-off plank and, to adjust the thickness of a plank that is to be sliced-off, the feeding table (6) and the knife table (8) are reciprocally adjustable with respect to the distance of their planes,
- and forward feed means to advance a squared timber supplied by the feeding table (6) essentially in lengthwise direction thereof over the feeding table against the edge of the knife (10), and pressing means to press a squared timber against the feeding and knife table whilst a plank is detached,
characterized in that the knife (10) is clamped on a knife support (18, 18') which can be installed in the knife table (8) as an exchangeable module and can be chucked therein at a precise position by means of a particularly hydraulically assisted quick-gripping device (40, 42, 44).

2. A device according to claim 1 characterized in that conveying means (31) are provided that are allocated or can be allocated to said knife table (8), wherewith the knife support (18, 18') can be removed from the knife table (8) essentially sideways (B) if necessary after having been slightly lifted.

3. A device according to claim 2 characterized in that conveying means (31) are connected or can be connected with at least a first depositing device (38) to deposit a knife support (18).

4. A device according to claim 3 characterized in that there is provided at least another depositing device (38') to receive a knife support (18) in standby condition and in that the conveying devices (31) are developped such that they take over a first knife support (18) from the knife table (8) and deposit it upon the first depositing device (38) in order to successively take over a second knife support (18') from the standby condition from the second depositing device (38') and to transport it into the knife table (8).

5. A device according to claim 4 characterized in that the conveying devices (31) and the depositing devices (38, 38') are part of a turntable arrangement (30) which is provided along its turning circle with at least two depositing devices (38, 38'), each thereof being moveable in coordination to the knife table (8) and in that the conveying devices (31) comprise means (36) provided at the turntable arrangement in order to exchange a knife support (18, 18') between the knife table (8) and a depositing device (38, 38') disposed in coordination therewith.

6. A device according to at least one of claims 1 to 5 wherein the knife (10) is disposed at an accute angle with respect to the direction of the forward feed (A) of a squared timber characterized in that the knife support (18) can be removed from the knife table (8) in a direction opposed to the backedge of the feeding table (6), which is opposite to the knife-edge aslant to the direction of the forward feed (A) of a squared timber.

7. A device according to claim 6 characterized in that the width of the knife support (18) in the direction of the forward feed (A) of a squared timber corresponds essentially to the length of the extend of the knife in the direction of the forward feed.

8. A device according to claim 7 characterized in that the knife support (18) together with its portion of the knife table and the knife-edge can be returned beneath the plane of the remnant knife table (8).

9. A device according to at least one of claims 1 to 8 characterized in that the quick-gripping device (40, 42, 44) comprises elements having a hammer head-like cross-section and being provided at the knife support (18) or at the knife table (8), which elements can be introduced into corresponding T-shaped undercut grooves (40) of the respective counterpart when the knife support (18) is transported into place and in that the elements having a hammer head-like cross-section can be braced against the undercut face of the T-shaped grooves by means of hydraulically operating mechanisms.

10. A device according to anyone of claims 3 to 9 characterized in that to a depositing device (38, 38') is assigned or can be assigned a device to sharpen the cutting knife, wherewith a cutting knife disposed upon said depositing device can be worked.

## Revendications

1. Dispositif pour séparer par découpage de minces planches de bois équarri, comportant
- une première table ou table d'amenée (6),
- au moins une seconde table ou table à couteau (8), servant essentiellement de support pour un bois équarri résiduel, dont l'épaisseur est réduite de l'épaisseur d'une planche après la séparation d'une planche,
- un couteau (10), disposé sur le bord avant de la table à couteau (8), tourné vers la table d'amenée (6) et dont le tranchant s'étend essentiellement dans le plan de la table à couteau (8) et parallèlement à une certaine distance du plan de la table d'amenée (6), une lente (14) étant prévue entre le tranchant du couteau et le bord arrière de la table d'amenée, qui est situé en vis-à-vis, pour l'évacuation d'une planche séparée, et la table d'amenée (6) et la table à couteau (8) étant déplaçables l'une par rapport à l'autre à la distance de leurs plans, pour le réglage de l'épaisseur d'une planche devant être séparée,
- ainsi que des moyens d'avance servant à faire avancer un bois équarri, supporté par la table d'amenée (6), essentiellement dans sa direction longitudinale sur la table d'amenée et en direction du tranchant du couteau (10), et des moyens de serrage servant à serrer un bois équarri contre la table d'amenée et la table à couteau pendant la séparation d'une planche,
caractérisé en ce que le couteau (10) est serré sur un porte-couteau (18,18'), qui peut être inséré en tant qu'unité de construction interchangeable, dans la table à couteau (8) et peut être serré dans une position précise dans cette table au moyen d'un dispositif de serrage rapide (40,42,44) assisté notamment par une action hydraulique.

2. Dispositif selon la revendication 1, caractérisé en ce qu'il est prévu des moyens d'entraînement (31), qui sont associés ou peuvent être associés à la table à couteau (8) et à l'aide desquels le porte-couteau (18,18') peut être ressorti de la table à couteau (8) éventuellement après un certain déplacement de soulèvement essentiellement dans une direction latérale (B).

3. Dispositif selon la revendication 2, caractérisé en ce que les moyens d'entraînement (31) sont reliés ou peuvent être reliés à au moins un premier dispositif de rangement (38) pour le rangement d'un porte-couteau (18).

4. Dispositif selon la revendication 3, caractérisé en ce qu'au moins l'autre dispositif de rangement (38) servant à recevoir un porte-couteau (18) est prévu dans une position d'attente, et que les moyens d'entraînement (31) sont agencés de manière à retirer un premier couteau (18) de la table à couteau (8), de le déposer sur le premier dispositif de rangement (38), pour ensuite retirer un second porte-couteau (18') de la position d'attente du second dispositif de rangement (38') et l'introduire dans la table à couteau (8).

5. Dispositif selon la revendication 4, caractérisé en ce que les moyens d'entraînement (31) et les dispositifs de rangement (38,38') font partie d'un dispositif à plateau rotatif (39), qui comporte, le long de son cercle de rotation, au moins deux dispositifs de rangement (38,38'), dont chacun est déplaçable en association avec la table à couteau (8), et que les moyens d'entraînement (31) comprennent des moyens (36) prévus sur le dispositif formant plateau rotatif pour l'échange d'un porte-couteau (18,18') entre la table à couteau (8) et un dispositif de rangement (38,38') associé à cette table.

6. Dispositif selon au moins l'une des revendications 1-5, dans lequel le couteau (10) est disposé de manière à faire un angle aigu par rapport à la direction d'avance (A) d'un bois équarri, caractérisé en ce que le porte-couteau (18) peut être retiré de la table à couteau (8) dans une direction, tournée à l'opposé du bord arrière, situé à l'opposé du tranchant du couteau, de la table d'amenée (6), transversalement par rapport à la direction d'avance (A) d'un bois équarri.

7. Dispositif selon la revendication 6, caractérisé en ce que la largeur du porte-couteau (18) dans la direction d'avance (A) d'un bois équarri correspond essentiellement à la longueur sur laquelle s'étend le couteau dans cette direction d'avance (A).

8. Dispositif selon la revendication 7, caractérisé en ce que le porte-couteau (18) peut être rétracté, avec sa partie de la table à couteau et le tranchant du couteau, au-dessous du plan de la table à couteau restante (8).

9. Dispositif selon au moins l'une des revendications 1-8, caractérisé en ce que le dispositif de serrage rapide (40,42,44) comporte des éléments prévus sur le porte-couteau (18) ou sur la table à couteau (8) possédant une section transversale en forme de tête de marteau et qui, lors de l'introduction du porte-couteau (18), peuvent être insérés dans des rainures correspondantes en contre-dépouille en forme de T (40) de l'autre partie respective, et que les éléments possédant une section transversale en forme de marteau peuvent être serrés, à l'aide de dispositifs hydrauliques d'actionnement, contre les surfaces en contre-dépouille des rainures en forme de T.

10. Dispositif selon l'une des revendications 3-9, caractérisé en ce qu'à un dispositif de rangement (38,38') est ou peut être associé un dispositif pour aiguiser le couteau, et à l'aide duquel un couteau situé sur le dispositif de rangement peut être affûté.
